# EUROPEAN PATENT APPLICATION

(11) **EP 2 418 436 A1**
(43) Date of publication of application: **15.02.2012**
(21) Application number: 10172671.9
(22) Date of filing: 12.08.2010
(51) Int. Cl.: F24J 2/04, F24J 2/20, F24J 2/34, F24J 2/44, F24J 2/46

(54) **Solar heater**

(71) Applicant: WCC Ltd., MLH 2657 Mellieha (MT)
(72) Inventor: Willemsen, Gerrit Jaap, MLH2657, Mellieha (MT)
(74) Representative: Hooiveld, Arjen Jan Winfried

(57) **Abstract**

The invention relates to a solar heater (1), comprising:
- a container (2) for storing fluid;
- a heat collector arranged on said container (2) for collecting heat;
- a partition (5) arranged in said container (2) for dividing said container (2) in two separate compartments (6,7), wherein a first compartment (6) is in heat exchanging contact with said heat collector, and wherein said second compartment (7) is a thermally isolated compartment;
- a first one-way valve (8) arranged in said partition (5) for transporting fluid from the first compartment (6) to the second compartment (7); and
- a second one-way valve (9) arranged in said partition for transporting fluid from the second compartment (7) to the first compartment (6), wherein during use the second one-way valve (9) is in fluidic communicating connection with a lower fluid level than the first one-way valve (8).

## Description

The invention relates to a solar heater.

A type of solar heater that is generally known by the person skilled in the art comprises a solar collector for collecting heat, which solar collector is connected via pipes to a container for storing water. The container may be arranged vertically higher than the solar collector, such that heated water passively rises to the container, or vertically lower than the solar collector, such that a pump is required.

A disadvantage of the known solar heaters is that they are relatively complex and/or expensive and/or large.

It is an object of the invention to obviate at least one of these disadvantages in the sense that a solar heater is provided that comprises:
- a container for storing fluid;
- a heat collector arranged on said container for collecting heat;
- a partition arranged in said container for dividing said container in two separate compartments, wherein a first compartment is in heat exchanging contact with said heat collector, and wherein said second compartment is a thermally isolated compartment;
- a first one-way valve arranged in said partition for transporting fluid from the first compartment to the second compartment; and
- a second one-way valve arranged in said partition for transporting fluid from the second compartment to the first compartment, wherein during use the second one-way valve is in fluidic communicating connection with a lower fluid level than the first one-way valve.

During use, fluid, in particular water, in the first compartment is quickly heated due to the heat exchanging contact with the heat collector. The heated water flows from the first compartment to the second compartment via the first one-way valve arranged in said partition and relatively colder water flows from the second compartment to the first compartment via the second one-way valve, such that water circulation occurs in the container until a balance between the two compartments is reached. In this way, heated water is stored in the second compartment that is thermally isolated. An advantage of the one-way valves is that the water circulation is not reversed when the first compartment is cooled, for example during night.

The solar heater according to the invention is a simple and/or compact and/or efficient solar heater that quickly heats the water. Preferably, said collector and/or said partition may be releasably mounted to said container, such that said collector and/or said partition may easily be removed from said container for cleaning and/or repairing said collector and/or said partition and/or said container.

Preferably, an outlet is included in the second compartment for discharging fluid from said second compartment. Heated fluid, in particular water, may easily be discharged from the second compartment via said outlet when hot water is needed by a user. Above 4°C, the density of water decreases with increasing temperature and therefore, relatively warmer water will be present in an upper part of the second compartment. Therefore is said outlet preferably located in an upper area of the second compartment.

In an embodiment of the solar heater according to the invention, a feed is included in the first and/or second compartment for feeding fluid to said first and/or second compartment. Via said feed cold fluid that is to be heated may be fed to said container. Preferably said feed is located in a lower area of the second compartment.

In another embodiment of the solar heater according to the invention, the partition is floatably arranged in said container, such that said partition is floatable on fluid present in said second compartment, wherein a sealing extends between the upper surface of the partition and said heat collector in the peripheral zone of the partition. An advantage of such a floatable partition is that freezing of water in the first compartment may be prevented.

In a preferred embodiment of the solar heater according to the invention, said heat collector comprises a metal plate.

In another preferred embodiment of the solar heater according to the invention, a transparent or translucent plate is arranged on said heat collector, wherein an air layer is present between said heat collector and said glass plate.

In yet another preferred embodiment of the solar heater according to the invention, the depth of the first compartment is relatively small compared to the surface of the metal plate. Due to the relatively small depth of the first compartment the fluid is quickly heated.

In still another preferred embodiment of the solar heater according to the invention, the volume of the first compartment is smaller than the volume of the second compartment. Due to the relatively small volume of the first compartment the fluid is quickly heated and due to the relatively large volume of the second compartment a large amount of water may be stored.

Preferably, the solar heater comprises mounting means for mounting the solar heater with an angle relative to the horizontal plane, wherein the angle amounts to a maximum of about 60°. An advantage of the mounting means is that the solar heated may be mounted such that the collector is facing the sun.

The invention will now be explained in more detail with reference to the accompanying drawing, wherein:
- figures 1A, 1B are perspective views of two embodiments of a solar heater according to the invention;
- figure 2 is a cross section of a solar heater according to the invention; and
- figures 3A, 3B are exploded views of the different parts of a third embodiment of the solar heater according to the invention, wherein 3A is a perspective view and 3B is a side view.

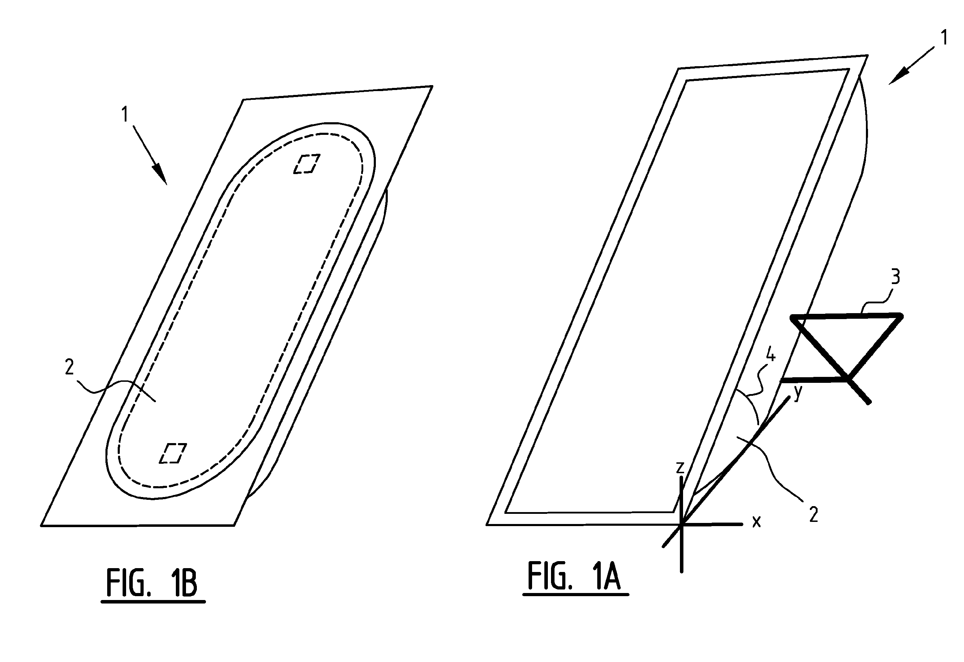

Figures 1A, 1B show two embodiments of a solar heater 1.

The solar heater 1 according to a first embodiment comprises a container 2 with the form of half a cylinder, with rounded endzones, as is shown in figure 1A. In a second embodiment of the solar heater 1, the solar heater 1 also comprises a container 2 with the form of half a cylinder, but with spherical endzones, as is shown in figure 1B. Such a form of half a cylinder with rounded or spherical endzones has the advantage that this offers enough strength for the container 2 for withstanding the pressure of the water that is contained in the container 2 during use. Instead of half a cylinder, also a spherical container (not shown) or any other form that provides sufficient strength to withstand the water pressure may be used.

Figure 1A shows that the solar heater 1 is mounted in a frame 3, in a way such that the angle 4 of the storage solar heater 1 with respect to the x,y-plane may be adjusted.

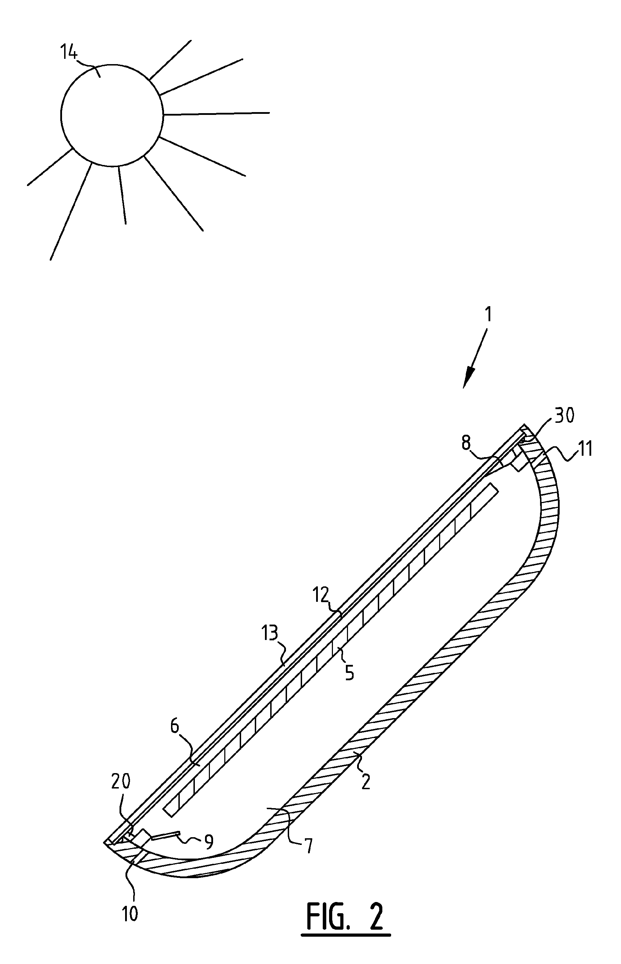

Figure 2 is a cross section of the solar heater 1, which shows that a thermally isolating partition 5 is arranged in said container 2 for dividing said container in two separate compartments 6, 7. A first one-way valve 8 is included in a first endzone of said partition 5 for transporting water from the first compartment 6 to the second compartment 7 and a second one-way valve 9 is included in the opposite endzone of said partition 5 for transporting water from the second compartment 7 to the first compartment 6. The second one-way valve 9 is in fluidic communicating connection with a lower water level than the first one-way valve 8. A feed 10 and an outlet 11 are included in the second compartment 7 for feeding, respectively discharging, water to, respectively from, the second compartment 7. A metal plate 12 is arranged over the container 2, and a (double) glass plate 13 is arranged over the plate 12. An air layer is present between the metal plate 12 and the glass plate 13.

With use of a frame (see figure 1A), the solar heater 1 is mounted with an angle 4 of 45° with respect to the x,y-plane, such that the solar heater 1 is facing the sun 14 (see figure 2). The metal plate 12 will heat up due to radiation by the sun and/or due to warm air surrounding the solar heater 1. The heat is then exchanged between the metal plate 12 and the water in the first compartment 6, such that the water is heated. Due to the heating, the pressure of the water in the first compartment increases and the density of the water decreases, such that the water will flow through the first one way valve 8 to the second compartment 7. Due to the water pressure increase in the second compartment 7, water present in the second compartment 7 will flow through the second one way valve 9 to the first compartment 6, such that water circulation in the container 2 occurs until a balance between the two compartments 6, 7 is reached. The valves 8, 9 and/or the partition 5 and/or the container 2 and/or the plate 12 are preferably embodied such, for example in size and shape, that they disrupt the water circulation as little as possible. Due to the angle 4 of the solar heater 1 and due to the density of water decreasing with increasing temperature above 4°C, relatively warmer water is located near the first one way valve 8, which is relatively higher in the vertical direction as compared to the second one way valve 9, and relatively colder water is located near the second one way valve 9. Due to this, it is the relatively warmer water of the first compartment 6 that will flow to the second compartment 7 for storage and it is the relatively colder water of the second compartment 7 that will flow to the first compartment 6, until all the water is of the same temperature. With use of the outlet 11, warm water that is stored in the second compartment 7 may be discharged. This way, the solar heater may easily be applied for, for example, domestic use. When water is discharged, fresh water will enter the second compartment 7 through the feed 10, such that the system stays balanced. It is noted that due to the one way valves water flows will not be reversed when the heat flows are reversed, for example, during the night. For quickly heating the water in the first compartment 6, the depth of the first compartment 6 is relatively small compared to the surface of the metal plate 12. The volume of the second compartment 7 is large compared to the volume of the first compartment 6, such that enough space is provided for storing the heated water.

As is clear from the operating of the solar heater 1, a simple water heater is provided, wherein the heat exchanging part is one integral part with the storing part, such that the solar heater is easily manageable and/or compact. The size of the solar heater 1 may easily be adapted to a user's desires, such that more or less water may be heated or cooled and stored. The different parts of the solar heater 1 are removable, such that cleaning or repairing of the parts can easily take place.

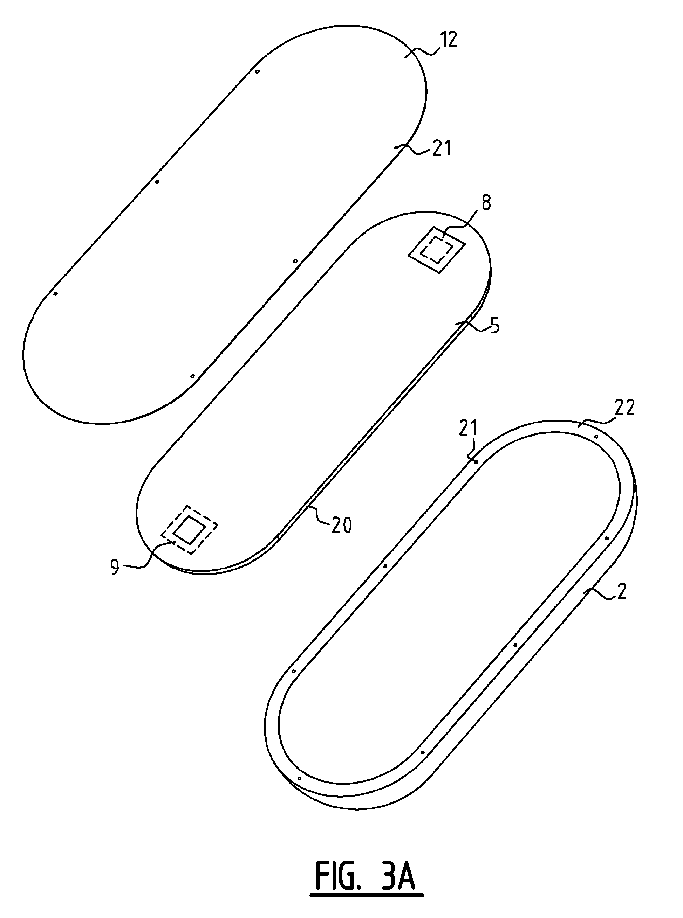

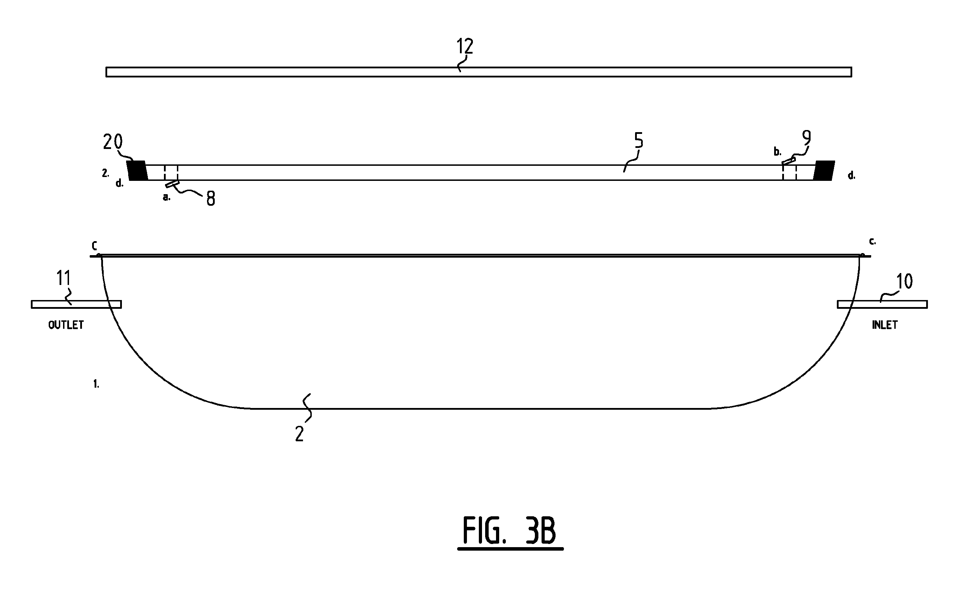

Figures 3A, 3B show the different parts of the solar heater 1, comprising the container 2, the partition 5, the metal plate 12 and the glass plate 13. The partition 5 comprises a sealing 20, which extends upwards from the upper surface of the partition 5 in the peripheral zone of the partition 5, such that the sealing 20 extends between the partition 5 and the plate 12. In the case that the partition 5 is floatable, the sealing 20 provides a water tight sealing between the two compartments 6, 7. An advantage of the floatable partition 5 and the sealing 20 is that the risk of damage due to ice formation may be decreased. This is due to that when ice is formed in the first compartment 6, said ice expands, such that the floatable partition 5 is pushed downwards. Due to this, water flows through the space available between the sealing 20 and the plate 12 such that further ice formation is prevented. Further, ice formation in the first compartment 6 may be prevented to some extend due to heat that is exchanged between the second compartment 7 and the first compartment 6 via the partition 5.

Figure 3A further shows holes 21, which are provided in a predetermined distribution over the peripheries of the container 2 and the plate 12, such that mounting means such as screws, or bolts, may be applied to the holes 21 for mounting the plate 12 to the container 2. Preferably, a recess 22 extends along the periphery of the container 2, which recess may accommodate a sealing 30 for preventing heat exchange between the plate 12 and the container 2 and for a water tight sealing of the second compartment 6.

The container 2 and/or the partition 5 may be manufactured from any suitable material, for example a synthetic material, e.g. a foam, such as polyurethane, polyethylene. Preferably, said container 2 and/or said partition 5 are manufactured from foam (or cellular) glass, even more preferably from foam glass that is produced from recycled waste glass. An advantage of foam glass is that this material is able to withstand high temperatures. Preferably, said container also comprises a phase-change material, wherein said phase-change material is arranged on said container in such a way that it is not in direct contact with the water. For example, said phase-change material could be arranged on the exterior surface of the container. A phase-change material has the advantage that it functions as a temperature buffer. Also, during heating the temperature initially remains low due to the phase-change material, such that water circulation is increased. Another advantage is that the solar heater may be more compact when the container comprises phase-change material. For optimal heat exchange, the plate 12 is preferable manufactured from any suitable heat conducting material, such as a metal.

The invention is not restricted to the embodiments in the drawing, but it also extends to other embodiments within the scope of the appended claims.

## Claims

1. Solar heater, comprising:
- a container for storing fluid;
- a heat collector arranged on said container for collecting heat;
- a partition arranged in said container for dividing said container in two separate compartments, wherein a first compartment is in heat exchanging contact with said heat collector, and wherein said second compartment is a thermally isolated compartment;
- a first one-way valve arranged in said partition for transporting fluid from the first compartment to the second compartment; and
- a second one-way valve arranged in said partition for transporting fluid from the second compartment to the first compartment, wherein during use the second one-way valve is in fluidic communicating connection with a lower fluid level than the first one-way valve.

2. Solar heater according to claim 1, wherein an outlet is included in the second compartment for discharging fluid from said second compartment.

3. Solar heater according to claim 1 or 2, wherein a feed is included in the first and/or second compartment for feeding fluid to said first and/or second compartment.

4. Solar heater according to any of the preceding claims 1-3, wherein the partition is floatably arranged in said container, such that said partition is floatable on fluid present in said second compartment, wherein a sealing extends between the upper surface of the partition and said heat collector in the peripheral zone of the partition.

5. Solar heater according to any of the preceding claims 1-4, wherein said heat collector comprises a metal plate.

6. Solar heater according to any of the preceding claims 1-5, wherein a transparent or translucent plate is arranged on said heat collector, wherein an air layer is present between said heat collector and said glass plate.

7. Solar heater according to any of the preceding claims 1-6, wherein the depth of the first compartment is relatively small compared to the surface of the metal plate.

8. Solar heater according to any of the preceding claims 1-7, wherein the volume of the first compartment is smaller than the volume of the second compartment.

9. Solar heater according to any of the preceding claims 1-8, wherein the solar heater comprises mounting means for mounting the solar heater with an angle relative to the horizontal plane, wherein the angle amounts to a maximum of about 60°.
